# EUROPEAN PATENT SPECIFICATION

(11) **EP 3 774 457 B1**
(45) Date of publication and mention of the grant of the patent: **14.06.2023**
(21) Application number: 19781934.5
(22) Date of filing: 06.04.2019
(51) Int. Cl.: B60R 25/24, B60R 25/02, B62K 23/02

(54) **KEYLESS LOCK FOR VEHICLES**
SCHLÜSSELLOSES SCHLOSS FÜR FAHRZEUGE
SERRURE SANS CLEF POUR VÉHICULES

(30) Priority: 06.04.2018 IN 201811013157
(43) Date of publication of application: 17.02.2021
(73) Proprietor: Minda Corporation Limited, Noida, Uttar Pradesh 201301 (IN)
(72) Inventor: PURI, Vikram, Noida, Uttar Pradesh 201301 (IN); GOSWAMI, Deepak, Noida, Uttar Pradesh 201301 (IN); RAJESH, Kumar, Noida, Uttar Pradesh 201301 (IN)
(74) Representative: Mewburn Ellis LLP
(86) International application number: PCT/IN2019/050285
(87) International publication number: WO 2019/193613

(56) References cited:
- EP-A1- 1 520 757
- US-B2- 6 343 494
- US-B2- 8 511 202

## Description

### TECHNICAL FIELD

The present disclosure relates to the field of vehicles. Particularly, the present disclosure relates to a keyless lock for vehicles. Further, the present disclosure discloses the construction and mechanism of the keyless lock for a two-wheeled vehicle.

### BACKGROUND

In conventional vehicles such as two-wheelers, use of ignition switch with handlebar locks which are operable by a key is known. Also, these locks may further have provision for locking or unlocking any peripheral locks such as a glove-box locks. In modern vehicles, electronic keyless locks are used in place of mechanical key-operated locks. Such electronic keyless locks comprise a switch that may initiate a wireless authentication system. The switch may be operated by rotating or pushing a button, a knob or a handle.

Such electronic keyless locks may have provision to operate the handlebar lock and ignition system using the knob or the handle. A separate switch may be provided to operate the peripherals locks of the vehicle. This increases the cost of the vehicle and also requires more space for mounting of additional components. Additionally, the buttons for peripheral locks may also be operated without any authentication, which poses a risk of unauthorized access to vehicle or its components.

EP 1 520 757 A1 discloses a vehicle locking apparatus. US 8 511 202 B2 discloses an ignition switch operation restricting device.

Present disclosure addresses one or more problems as discussed above and other problems associated with the art.

### SUMMARY

The present disclosure relates to a keyless lock for vehicles. The keyless lock comprises a rotor assembly having a knob. The knob is placed resiliently movable in a knob-rotor. The rotor assembly is configured to initiate a wireless authentication system in a mounted condition. The rotor-assembly is placed movable along a first axis on a stator for initiating the wireless authentication system. The keyless lock further comprises a stator assembly having the stator, a resiliently movable plunger, an electronic actuator, a microswitch configured to be moved along the first axis with the movement of the rotor-assembly and an extended portion extending from the stator. The extended portion configured to actuate a peripheral lock.

In an aspect, a peripheral lock element is disposed adjacent the extended portion to be actuated with the movement of the extended portion.

In an aspect, the extended portion is laterally extended from the stator for transferring the motion of the stator to the peripheral lock element.

In an aspect, the peripheral lock element is connected with the peripheral lock to actuate the peripheral lock for locking and unlocking.

In an aspect, a plunger is movably mounted in the stator with the spring and provided with a circlip.

In an aspect, the plunger comprising a head portion disposed adjacent the knob at mounted condition.

In an aspect, the wireless authentication system is connected with a solenoid assembly to activate and retract and extend a solenoid lever for locking and unlocking of the vehicle.

In an aspect, the knob-rotor is connected with the spring-loaded rotor through a pin for auto return of the knob after push.

In an aspect, the knob rotor is connected with a knob ring along with the spring-loaded balls.

In an aspect, the spring-loaded balls are provided for over torque limiting mechanism.

In an aspect, a slot is provided on the knob rotor for allowing the vertical movement of the knob rotor.

In an aspect, the rotor comprises a plurality of the slots to accommodate the solenoid lever.

In an aspect, the rotor comprises a slot to limit the linear movement of the knob-rotor with respect to rotor.

### BRIEF DESCRIPTION OF DRAWINGS

The figure(s) are incorporated with the specification, and serve to further illustrate the embodiments and illustrate various principles and advantages, in accordance with the present disclosure wherein:
Figure 1 illustrates an exploded view of a keyless lock for vehicles in accordance with an embodiment of the present disclosure.
Figure 2 illustrates the exploded view of a rotor assembly of the keyless lock for vehicles in accordance with an embodiment of the present disclosure.
Figure 3 illustrates a perspective view of a knob-rotor of the keyless lock for vehicles in accordance with an embodiment of the present disclosure.
Figure 4 illustrates the perspective view of a knob-ring of the keyless lock for vehicles in accordance with an embodiment of the present disclosure.
**Figure 5** illustrates the perspective view of a stator of the keyless lock for vehicles in accordance with an embodiment of the present disclosure.
**Figure 6** illustrates the perspective view of a plunger of the keyless lock for vehicles in accordance with an embodiment of the present disclosure.
**Figure 7** **and** **8** illustrate a sectional view of the keyless lock for un pressing and pressing condition of microswitch of the peripheral lock of the vehicles in accordance with an embodiment of the present disclosure.
**Figure 9** **and** **10** illustrates the sectional view of the keyless lock for locking and unlocking of the rotor by solenoid lever of the vehicles in accordance with an embodiment of the present disclosure.
**Figure 11** illustrates the perspective view of a rotor of the keyless lock for vehicles in accordance with an embodiment of the present disclosure.
**Figure 12** illustrates the exploded view of a mounting assembly for the keyless lock in accordance with an embodiment of the present disclosure.

### DETAILED DESCRIPTION

The present disclosure discloses a keyless lock. The keyless lock comprises a knob and a stator. The knob is configured to initiate a wireless authentication system and said knob is movable along a first axis for initiating the wireless authentication system. The stator configured to be moved along the first axis with the movement of the knob. The stator comprises an extended portion extending from the stator. The extended portion is configured to actuate a peripheral lock. A peripheral lock element is disposed adj acent the extended portion to be actuated with the movement of the extended portion. The extended portion may be laterally extending from the stator for engaging the peripheral lock element and transferring the motion of the stator to the peripheral lock element. The peripheral lock element may be connected with the peripheral lock to actuate the peripheral lock for locking and unlocking.

Accordingly, the present disclosure provides a keyless lock for vehicles. The keyless lock is described with reference to the figures and alternative embodiments; this description is not meant to be constructed in a limiting sense.

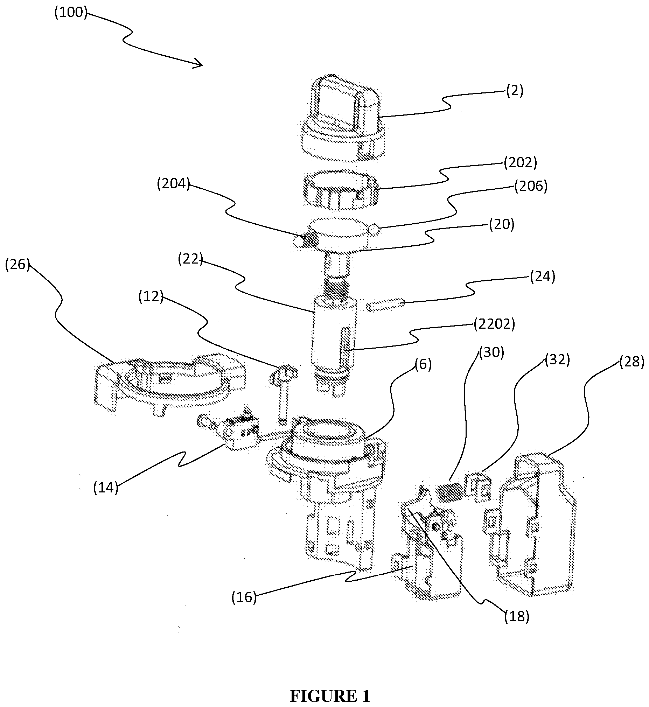

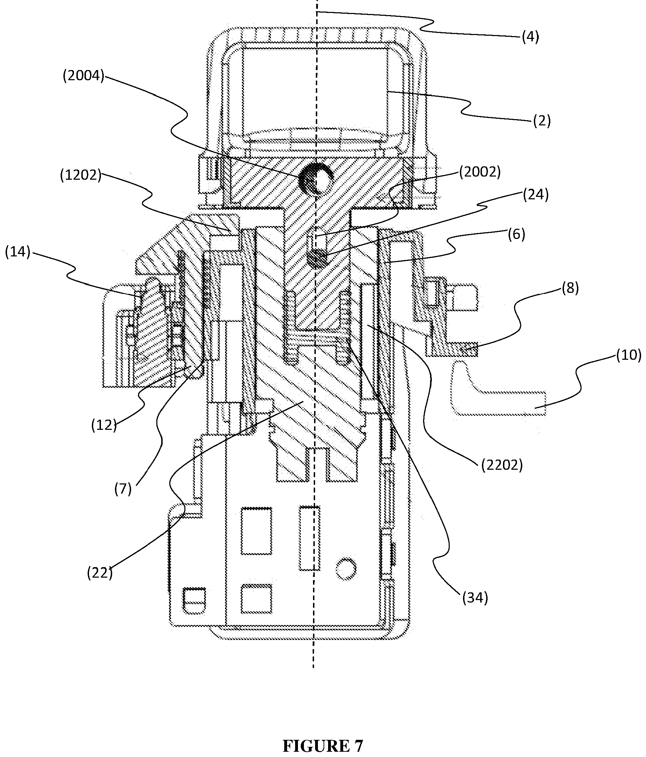

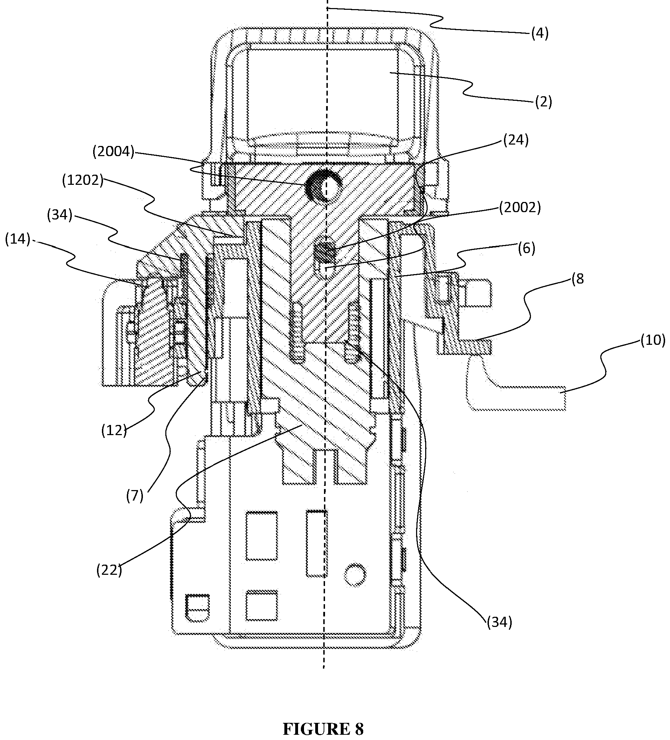

Figure 1 illustrates an exploded view of a keyless lock (100) for vehicles in accordance with an embodiment of the present disclosure. The keyless lock (100) comprises a knob (2), a stator (6), a plunger (12), a rotor (22), a wireless authentication system, a microswitch (14) and a solenoid assembly (also referred to as an electronic actuator (16). The knob (2) is configured to initiate a wireless authentication system. The knob (2) is movable along a first axis (4) for initiating the wireless authentication system. The stator (6) is configured to be moved along the first axis (4) with the movement of the knob (2). The stator (6) comprises an extended portion (8) configured to actuate a peripheral lock. The knob (2) is movable along a first axis (4) for initiating the wireless authentication system as depicted in the figure 7 and 8.

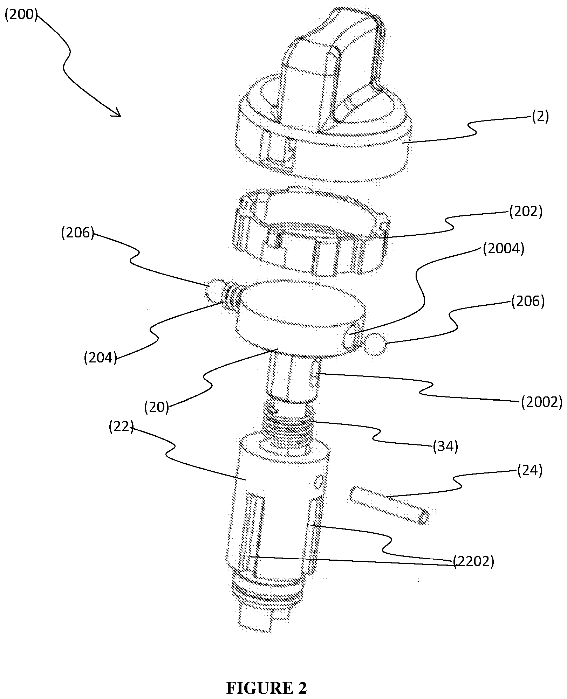

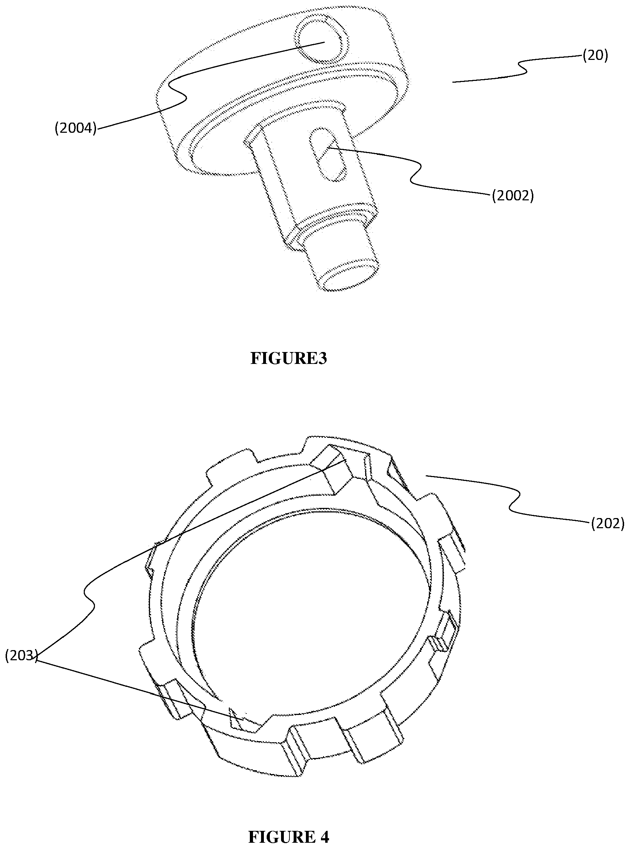

Figure 2 illustrates an exploded view of a rotor assembly (200) of the keyless lock (100) for vehicles in accordance with an embodiment of the present disclosure. As shown, the knob (2) is connected with a knob rotor (20). A knob ring (202) is placed between the knob rotor (20) and knob (2). The knob rotor (20) is connected with a knob ring (202) along with the spring-loaded balls (206). Referring to figure 3, the knob rotor (20) comprises a plurality of holes (2004) on the peripheral surface and a slot (2002). The plurality of holes (2004) is provided for accommodating a first spring (204) and a ball (206). Referring to the figure 4, the knob ring (202) comprises a plurality of cavities (203) on the inner peripheral surface. The plurality of cavities (203) is provided for receiving the plurality of balls loaded by the first spring inside said plurality of holes (2004). The knob (2), knob ring (202) and knob rotor assembly (20) provides an excessive torque protection mechanism or over-torque mechanism. Whenever, an excess amount of torque is applied on the knob (2) for unauthorised locking and unlocking, the plurality of balls (206) compress the first spring (204) to move inside the plurality of holes (2004) of the knob rotor (20). This breaks the engagement between the knob rotor (20) and knob (2) and allows the knob (2) to rotate freely without transferring the excess torque to the knob rotor (20). The knob rotor (20) is connected to the spring loaded rotor (22) and is held in the position by a locking pin (24) in said slot (2002). A resilient spring (34) is placed between the knob (20) and rotor (20) for biasing the knob rotor (20) in upwards direction. The slot (2002) allows the vertical movement of the knob rotor (20) when the user presses and releases the knob (2). The resilient spring (34) brings the knob rotor (20) back to its original position when the knob (2) is released by the user. The rotor (20) comprises slots (2204) for limiting the linear movement of the knob-rotor (20) with respect to rotor (22).

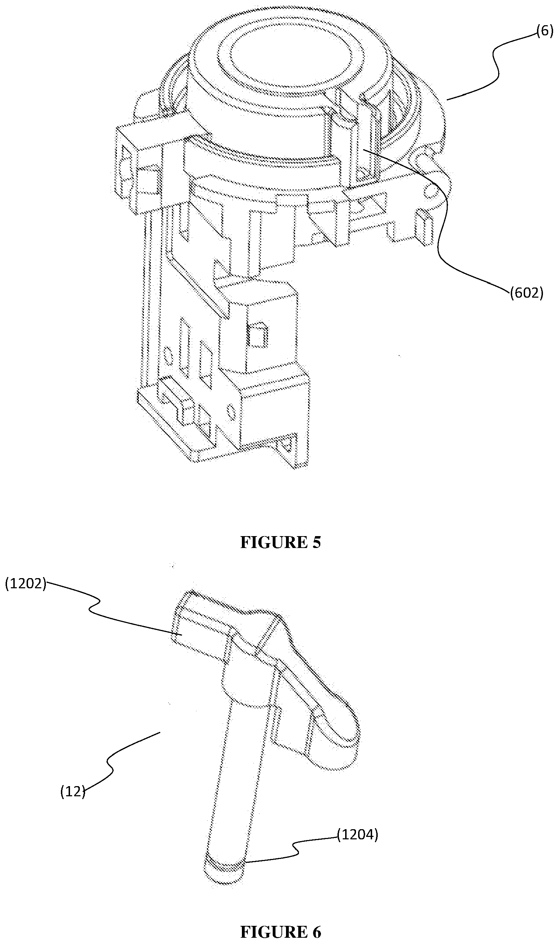

Figure 5 illustrates a perspective view of the stator (6) of the keyless lock (100) for vehicles in accordance with an embodiment of the present disclosure. The stator (6) is configured to be moved along the first axis (4) with the movement of the knob (2). As shown in Figure 7 and Figure 8, the stator (6) comprises an extended portion (8) and a mounting (602). The extended portion (8) is configured to actuate a peripheral lock and the mounting is provided for accommodating the plunger (12). The extended portion (8) is laterally extended from the stator (6) as depicted in the figure 7 and figure 8.

Figure 6, illustrates a perspective view of the plunger (12) of the key less lock for vehicles in accordance with an embodiment of the present disclosure. The plunger (12) comprises a head portion (1202) and a shaft portion (1204). In an embodiment, the head portion (1202) is laterally extended from the shaft portion (1204) and comprises a front surface and a rear surface. The front surface is disposed between the knob (2) and stator (6) to be pressed upon pushing of the knob (2), for providing a desired motion to the plunger (12). The rear surface is provided to be moved with the movements of the front surface. The rear surface is moveably placed over the microswitch (14) for the pressing the microswitch (14) to initiate the wireless authentication system. The shaft portion (1204) is moveably placed in the mounting of the stator (6). The plunger is mounted on the stator (6). A spring (34) is used to bias the plunger away from the actuated position. A circlip (7) may be used with the plunger for mounting the plunger on the stator.

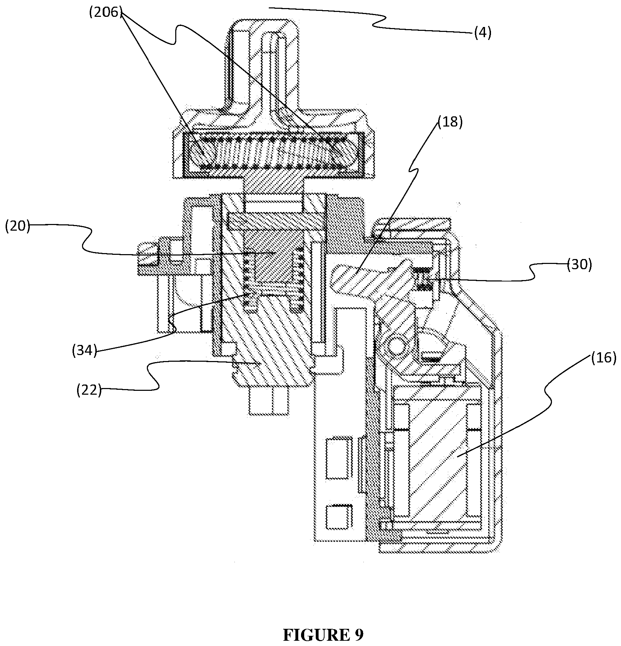

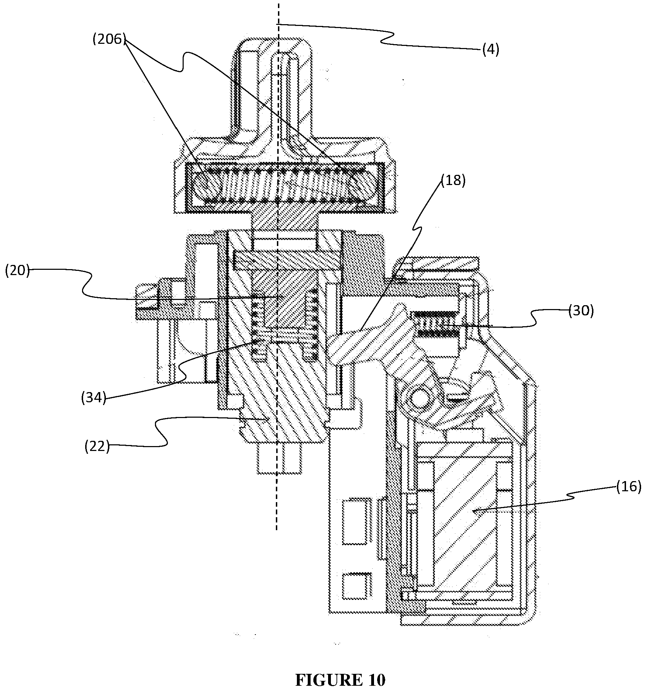

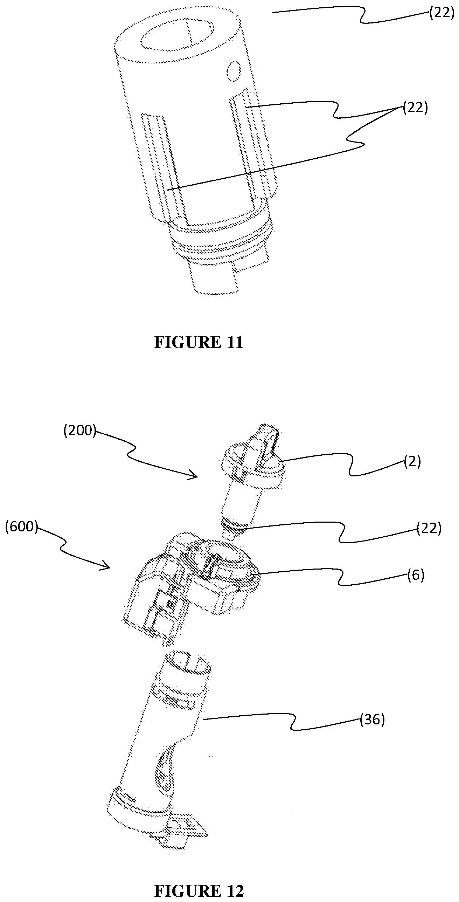

Figures 7-10 illustrate the positioning and arrangement of the microswitch (14). The microswitch (14) transfers a signal to the wireless authentication system for authentication. In an embodiment, the wireless authentication system is connected with a solenoid assembly (16). The solenoid assembly (16) comprises a solenoid lever (18) and a second spring (30). The second spring is connected with the solenoid lever and held by a supporting member (32). A back cover (28) is provided for covering the solenoid assembly (16). The rotor (22) comprises a plurality of slots (2202), as depicted in the figure 11, for receiving a portion of the solenoid lever (18) as depicted in the figure 10. The knob (2) is configured for pressing by a user. The knob (2) presses the plunger (12) which in turn presses the microswitch (14) and activates the wireless authentication system. The wireless authentication system searches for the key (wireless key) in the vicinity. If an authentic key is found, the wireless authentication system sends a signal to the solenoid assembly (16) to retract the solenoid lever (18) for disengaging it with the plurality of slots (2202) of rotor (22), as shown in figure 9, hence allowing the rotor (22) to rotate with the rotation of the knob (2) for locking and unlocking of the handlebar or other functions associated with the knob (2).

The knob may be configured to be moved between different angular positions. Each angular position and corresponding position of the rotor may be associated with a function dedicated to the angular position. For example, the handlebar lock condition may corresponding to a first angular position, the handlebar unlock condition may correspond to a second angular position, ignition OFF may correspond to a third angular position, ignition ON may correspond to a fourth angular position of the knob. Similarly, a first peripheral lock may be assigned a fifth angular position and a second peripheral lock may be assigned a sixth angular position, so on an so forth. The plurality of slots includes one slot corresponding to each angular position of the knob. It may be required for a user to each time press the knob and actuate wireless authentication system for moving from one angular position to another angular position of the knob.

Referring to figure 7 and figure 8, the extended portion (8) laterally extends from the stator (6) for engaging the peripheral lock element and transferring the motion of the stator (6) to a peripheral lock element (10). The peripheral lock element (10) is disposed in proximity of the extended portion (8) to be actuated with the movement of the extended portion (8). The peripheral lock element (10) may connected with the peripheral lock to actuate the peripheral lock for locking and unlocking of any peripheral component of the vehicle. In an embodiment, the peripheral lock element (10) may be connected with the peripheral lock by a cable. In another embodiment, there may be a magnetic linkage between the peripheral lock and peripheral lock element (10). In one more embodiment, the peripheral lock may have an electronic connection with the peripheral lock element (10).

Figure 12 illustrates a perspective view of a mounting assembly (36) in accordance with an embodiment of the present disclosure. The mounting assembly (36) is configured for holding the keyless lock (100) with the vehicle. In an embodiment, the mounting assembly (36) is configured for holding the keyless lock (100) with the front panel of the vehicle.

The operation of the keyless lock is described as following. The user presses the knob (2). The knob (2) presses the plunger (12) which in turn presses the microswitch (14) and activates the system. The wireless authentication system searches for the key in the vicinity. If the authentic key is found, the wireless authentication system sends a signal to the solenoid assembly (16) to retract the solenoid lever (18) for disengaging it with the plurality of slots (2202) of rotor (22), hence allowing the rotor (22) to rotate with the rotation of the knob (2) for locking and unlocking of the handlebar. The user further pushes the knob (2) downwards along the first axis (4). The knob (2) pushes the stator (6) downwards along the first axis (4). The downward movement of the stator results in corresponding downward movement of the extended portion (8). The extended portion (8) further pushes the peripheral lock element (10) downwards to actuate a peripheral lock for locking and unlocking.

The keyless lock may be configured such that the peripheral lock may be operated in a certain angular position of the knob. Since, a user has to actuate wireless authentication at every instance of operation of the keyless lock, a user may not reach the particular angular position unless the wireless authentication is positive. Accordingly, unauthorized actuation of peripheral locks may be prevented with the keyless lock in accordance with an embodiment of the present disclosure. Further, the keyless lock as disclosed herein provides for decrease in part numbers by providing a single keyless lock assembly for ignition, handlebar lock and peripheral locks in a compact assembly.

Accordingly, the present disclosure provides a keyless lock (100) that have provision for locking and unlocking the handlebar as well as peripheral lock by using a single knob (2)

A list of the reference numerals with respect to corresponding components of the keyless lock (100) for vehicles.

| **Components** | **Reference numerals** |
|---|---|
| Keyless lock | 100 |
| Knob | 2 |
| Rotor Assembly | 200 |
| Knob ring | 202 |
| Plurality of cavities | 203 |
| First Spring | 204 |
| Plurality of balls | 206 |
| First axis | 4 |
| Stator | 6 |
| Mounting | 601 |
| Extended portion | 8 |
| Peripheral lock element | 10 |
| Plunger | 12 |
| Head portion | 1202 |
| Shaft portion | 1204 |
| Microswitch | 14 |
| Solenoid assembly | 16 |
| Solenoid lever | 18 |
| Knob rotor | 20 |
| Slot | 2002 |
| Plurality of holes | 2004 |
| Rotor | 22 |
| Plurality of slots | 2202 |
| Locking pin | 24 |
| Top cover | 26 |
| Back cover | 28 |
| Second spring | 30 |
| Supporting member | 32 |
| Resilient spring | 34 |
| Mounting assembly | 36 |

## Claims

1. A keyless lock (100) comprising:
a rotor assembly (200) having a knob (2), the knob (2) resiliently movable in a knob-rotor(20), the rotor assembly (200) configured to initiate a wireless authentication system in a mounted condition, the rotor-assembly (200) is movable along a first axis (4) for initiating the wireless authentication system; and
a stator assembly (600) having a stator (6), resiliently movable plunger (12), an electronic actuator (16), a microswitch (14) configured to be moved along the first axis (4) with the movement of the rotor-assembly (200), an extended portion (8) extending from the stator (6), the extended portion (8) configured to actuate a peripheral lock.

2. The keyless lock (100) as claimed in claim 1, wherein a peripheral lock element (10) is disposed adjacent the extended portion (8) to be actuated with the movement of the extended portion (8).

3. The keyless lock (100) as claimed in claim 1, wherein a plunger (12) is movably mounted in the stator (6) with the spring (34) and provided with a circlip (7).

4. The keyless lock (100) as claimed in claim 3, wherein the plunger (12) comprising a head portion (1202) disposed adjacent the knob (2) at mounted condition.

5. The keyless lock (100) as claimed in claim 1, wherein the wireless authentication system is connected with a solenoid assembly (16) to activate and retract and extend a solenoid lever (18) for locking and unlocking of the vehicle.

6. The keyless lock (100) as claimed in claim 1, wherein the knob-rotor (20) is connected with the spring-loaded rotor (22) through a pin (24) for auto return of the knob after push.

7. The keyless lock (100) as claimed in claim 6, wherein the knob rotor (20) is connected with a knob ring (202) along with the spring-loaded balls (206).

8. The keyless lock (100) as claimed in claim 7, wherein the spring-loaded balls are provided for over torque limiting mechanism.

9. The keyless lock (100) as claimed in claim 6, wherein the rotor (22) comprises a plurality of the slots (2202) to accommodate the solenoid lever (18).

10. The keyless lock (100) as claimed in claim 6, wherein the rotor (20) comprises a slot (2204) to limit the linear movement of the knob-rotor (20) with respect to rotor (22).

## Patentansprüche

1. Schlüsselloses Schloss (100), das Folgendes umfasst:
eine Rotoranordnung (200) mit einem Knauf (2), wobei der Knauf (2) elastisch in einem Knaufrotor (20) bewegbar ist, wobei die Rotoranordnung (200) ausgelegt ist, um in einem montierten Zustand ein Drahtlos-Authentifizierungssystem zu initiieren, wobei die Rotoranordnung (200) entlang einer ersten Achse (4) bewegbar ist, um das Drahtlos-Authentifizierungssystem zu initiieren; und
eine Statoranordnung (600) mit einem Stator (6), einem elastisch bewegbaren Kolben (12), einem elektronischen Aktuator (16), einem Mikroschalter (14), der ausgelegt ist, um mit der Bewegung der Rotoranordnung (200) entlang der ersten Achse (4) bewegt zu werden, einem sich von dem Stator (6) erstreckenden Verlängerungsabschnitt (8), wobei der Verlängerungsabschnitt (8) ausgelegt ist, um ein Umfangsschloss zu betätigen.

2. Schlüsselloses Schloss (100) nach Anspruch 1, wobei ein Umfangsschlosselement (10) benachbart zu dem Verlängerungsabschnitt (8) angeordnet ist, um mit der Bewegung des Verlängerungsabschnitts (8) betätigt zu werden.

3. Schlüsselloses Schloss (100) nach Anspruch 1, wobei ein Kolben (12) mit der Feder (34) bewegbar im Stator (6) montiert und mit einem Sicherungsring (7) bereitgestellt ist.

4. Schlüsselloses Schloss (100) nach Anspruch 3, wobei der Kolben (12) einen Kopfabschnitt (1202) umfasst, der in einem montierten Zustand benachbart zu dem Knauf (2) angeordnet ist.

5. Schlüsselloses Schloss (100) nach Anspruch 1, wobei das Drahtlos-Authentifizierungssystem mit einer Solenoidanordnung (16) verbunden ist, um einen Solenoidhebel (18) zum Versperren und Entsperren des Fahrzeugs zu aktivieren und einzufahren und auszufahren.

6. Schlüsselloses Schloss (100) nach Anspruch 1, wobei der Knaufrotor (20) zur automatischen Rückstellung des Knaufs nach dem Drücken über einen Stift (24) mit dem federbelasteten Rotor (22) verbunden ist.

7. Schlüsselloses Schloss (100) nach Anspruch 6, wobei der Knaufrotor (20) zusammen mit federbelasteten Kugeln (206) mit einem Knaufring (202) verbunden ist.

8. Schlüsselloses Schloss (100) nach Anspruch 7, wobei die federbelasteten Kugeln für einen Überdrehungsbegrenzungsmechanismus bereitgestellt sind.

9. Schlüsselloses Schloss (100) nach Anspruch 6, wobei der Rotor (22) eine Vielzahl von Schlitzen (2202) zur Aufnahme des Solenoidhebels (18) umfasst.

10. Schlüsselloses Schloss (100) nach Anspruch 6, wobei der Rotor (20) einen Schlitz (2204) zur Begrenzung einer linearen Bewegung des Knaufrotors (20) in Bezug auf den Rotor (22) umfasst.

## Revendications

1. Serrure sans clé (100), comprenant :
un ensemble rotor (200) présentant un bouton (2), le bouton (2) pouvant être déplacé de manière élastique dans un rotor de bouton (20), l'ensemble rotor (200) étant configuré pour initier un système d'authentification sans fil dans un état monté, l'ensemble rotor (200) est mobile le long d'un premier axe (4) pour initier le système d'authentification sans fil ; et
un ensemble stator (600) présentant un stator (6), un plongeur mobile de manière élastique (12), un actionneur électronique (16), un microrupteur (14) configuré pour être déplacé le long du premier axe (4) avec le déplacement de l'ensemble rotor (200), une partie étendue (8) s'étendant à partir du stator (6), la partie étendue (8) étant configurée pour actionner une serrure périphérique.

2. Serrure sans clé (100) selon la revendication 1, dans laquelle un élément de serrure périphérique (10) est disposé adjacent à la partie étendue (8) pour être actionné avec le déplacement de la partie étendue (8).

3. Serrure sans clé (100) selon la revendication 1, dans laquelle un plongeur (12) est monté de manière à se déplacer dans le stator (6) avec le ressort (34) et est pourvu d'un circlip (7).

4. Serrure sans clé (100) selon la revendication 3, dans laquelle le plongeur (12) comprend une partie de tête (1202) disposée de manière adjacente au bouton (2) à l'état monté.

5. Serrure sans clé (100) selon la revendication 1, dans lequel le système d'authentification sans fil est connecté à un ensemble de solénoïde (16) pour activer et rétracter et étendre un levier de solénoïde (18) afin de verrouiller et déverrouiller le véhicule.

6. Serrure sans clé (100) selon la revendication 1, dans lequel le rotor de bouton (20) est connecté au rotor chargé par ressort (22) par l'intermédiaire d'une broche (24) pour un retour automatique du bouton après poussée.

7. Serrure sans clé (100) selon la revendication 6, dans laquelle le rotor de bouton (20) est relié à une bague de bouton (202) avec les billes chargées par ressort (206).

8. Serrure sans clé (100) selon la revendication 7, dans laquelle les billes chargées par ressort sont prévues pour un mécanisme de limitation de sur-couple.

9. Serrure sans clé (100) selon la revendication 6, dans laquelle le rotor (22) comprend une pluralité des fentes (2202) pour recevoir le levier de solénoïde (18).

10. Serrure sans clé (100) selon la revendication 6, dans laquelle le rotor (20) comprend une fente (2204) pour limiter le déplacement linéaire du rotor de bouton (20) par rapport au rotor (22).
